# EUROPEAN PATENT APPLICATION

(11) **EP 0 779 225 A1**
(43) Date of publication of application: **18.06.1997**
(21) Application number: 96308720.0
(22) Date of filing: 03.12.1996
(51) Int. Cl.: B65D 43/10

(54) **Dual composition lid and method of manufacture thereof**

(30) Priority: 11.12.1995 US 569845
(71) Applicant: AMWAY CORPORATION, Ada, Michigan 49355 (US); Rubbermaid Incorporated, Wooster, Ohio 44691 (US)
(72) Inventor: Kudirka, Paul J, N.E. Ada, Michigan 49301 (US); Pesa, William A., Wooster, Ohio 44691 (US)
(74) Representative: Bayliss, Geoffrey Cyril

(57) **Abstract**

A lid (14) for enclosing a container base (12) is disclosed comprising a center lid component (16) and a perimeter lid component (18) molded therearound. The component (16) is molded from a first plastic material and the component (18) from a second, substantially less rigid, material. The lid (14) is sequentially molded by first forming the center component (16) and insert molding the second component (18) therearound. The resultant lid is rigid in the center but pliable about the perimeter for easier application and removal of the lid to the base, and for establishing a positive seal therebetween throughout the range of operating temperatures.

## Description

### Background of the Invention

### Field of the Invention

The subject invention relates generally to storage container lids and the manufacture thereof and, more specifically, to plastic lids for enclosing and sealing food storage containers.

### The Prior Art

Food storage containers, such as those useful in storing food leftovers, are well-known consumer products. Typically such containers comprise a container base and a lid, each formed by conventional molding processes from commercially available plastic material such as linear, low density polyethylene. The lid fits over the upper rim of the base to enclose the base, and a tight seal is typically created between the lid and an outer surface of the base to facilitate an air tight preservation of the perishable contents of the container. The food containers operate to store contents in refrigerated environments and also in reheating the contents in a microwave environment. Thus, the range of operating temperatures is quite wide.

U.S. Patent No. 4,471,880 represents a commercially available, state of the art food storage container. The lid is designed to have an inner diameter slightly smaller than the outer diameter of the base, such that as the lid is pressed downwardly upon the rim, the downturned peripheral lid skirt is flexed outward. When downward pressure is removed, the lid skirt is drawn inward to create a seal between the skirt and an outer surface of the container base.

The container of patent '880 works satisfactorily and has been well received in the market. However, several shortcomings prevent the container from meeting all of the consumer's needs. First, the container lid, to be pliable enough for use in a wide range of temperatures, must be formed of commercial grade linear low density polyethylene plastic material. The soft plastic is advantageous in enabling the lid to flex downward and over the container base even when the container is at refrigerator temperatures.

However, the soft plastic used in the lid can, in several respects, be undesirable. When the container is used in storing and reheating certain foods such as those having a high grease content, or acidity, staining of linear low density polyethylene is not uncommon, particularly under high microwave temperatures. Such discoloration is a negative product attribute that detracts from the product's appeal. In addition, linear low density polyethylene is prone to environmental stress cracking over time, another less than desirable attribute from the consumer's viewpoint.

A lid can be formed, of course, from more stain and stress cracking resistant material such as polypropylene. However, polypropylene is substantially harder and a lid composed thereof may not adequately achieve a tight seal against the base throughout the requisite temperature range. A lid formed of relatively hard polypropylene will also be more difficult to attach and disattach from the container base, particularly at low refrigerator temperatures.

### Summary of the Invention

The subject invention overcomes the aforementioned deficiencies in state of the art containers. The container comprises a conventional base formed by conventional injection molding from commercially available plastic such as polypropylene. The lid is of composite material construction, comprising an inward center component formed of relatively stiff plastic such as polypropylene, and an outer perimeter component molded to the center component in a secondary molding operation. The perimeter component is composed of substantially more flexible rubber based material and provides the sealing interface with the base container as the lid is fitted downward over the upper rim of the base.

The polypropylene center component is resistant to staining and stress cracks. The flexibility of the outer perimeter component makes the lid easier to apply to the container base throughout a wide range of temperature variation and maintains a positive sealing engagement.

The center component is formed to provide a dovetail-shaped flange that projects outward from the outer peripheral edge of the center component. The perimeter component is molded to the center component peripheral edge and the dovetail-shaped flange is thereby embedded into an inward edge of the perimeter component, to securely connect the two lid components together and form one integral lid unit.

Thus, the subject lid provides structural integrity and resistance to staining and cracking because the rigid center component is formed of polypropylene, yet the lid also provides a sealing interface that is highly effective throughout a wide range of temperature conditions.

Accordingly, it is an objective of the invention to provide a lid that maintains its structural integrity throughout repeated use and wide ambient temperature changes.

A further objective is to provide a food container lid having enhanced flexibility in the sealing perimeter to facilitate easy application and removal of the lid in myriad ambient temperature conditions.

Still another objective is to provide a food container lid less prone to staining and having enhanced resistance to stress cracks.

Yet another objective is to provide a food container lid of composite material construction for optimized performance characteristics.

A further objective is to provide a food container lid that is economically and readily manufactured.

An additional objective is to provide a food container lid that is manufacturable from commercially available materials and by conventional mold equipment.

Another objective is to provide an improved method for manufacturing a food container lid so as to incorporate all of the aforementioned objectives.

These and other objectives, which will be apparent to those skilled in the art and which utilize the teachings herein set forth, are achieved by a preferred embodiment that is described in detail below and illustrated in the accompanying drawings.

### Description of the Accompanying Drawings

Fig. 1 is a perspective view of the subject food storage container with the lid affixed to the base.

Fig. 2 is an exploded perspective view of the lid showing the center and perimeter components.

Fig. 3 is a top plan view of the assembled lid and container base.

Fig. 4 is a partial section view through the container shown in Fig. 3, taken along the line 4-4.

### Description of the Preferred Embodiment

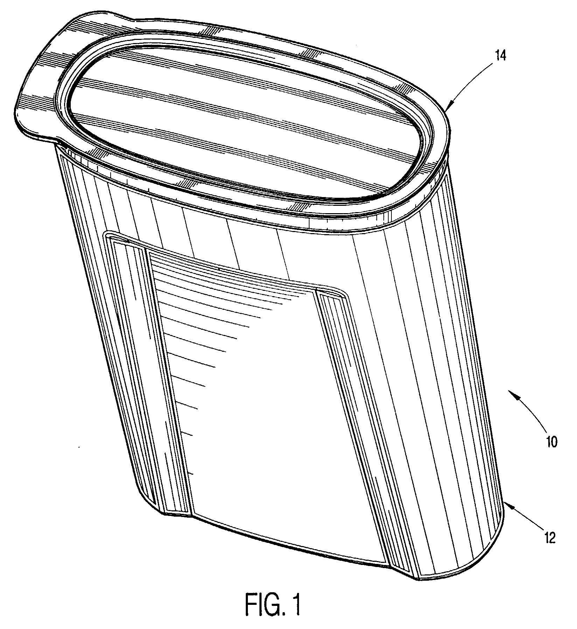

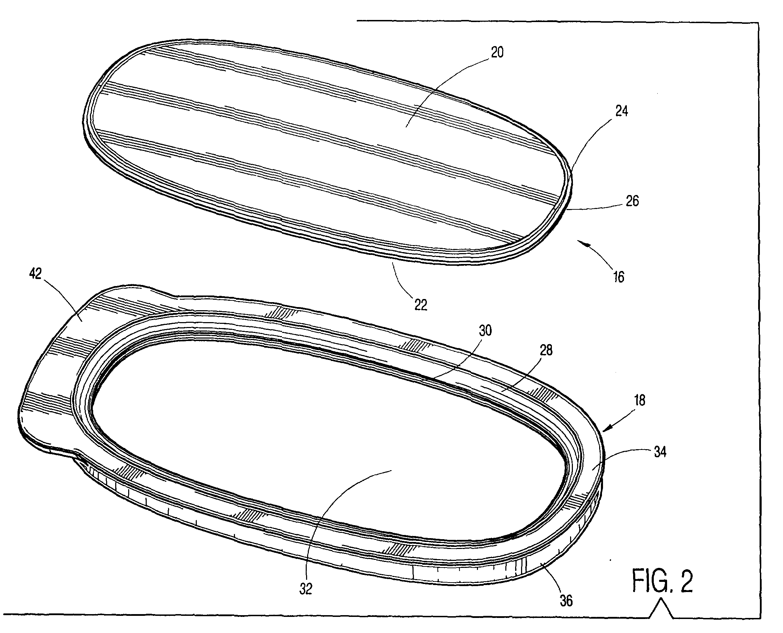

Referring first to Figs. 1, 2, and 4, the subject storage container 10 is shown to comprise a container base 12 and a lid 14. The lid 14 is an assembly of two component parts; a center component 16 and a perimeter component 18. The component 16 is generally oval in shape, defined by an upper surface 20 and a bottom surface 22 which extend outward to a terminal edge 24.

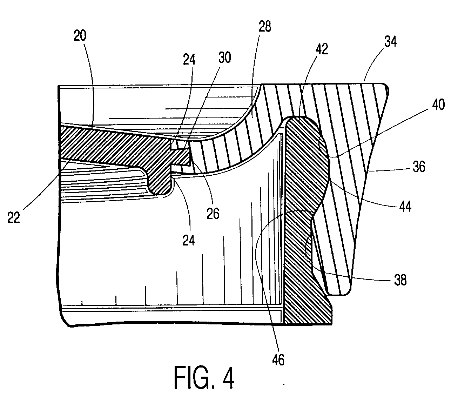

It will be seen from Fig. 4 that the center component 16 is downwardly concave in the center and flattens into an orientation approaching planar at the terminal edge 24. The terminal edge 24 is molded to present an outwardly projecting dovetail-shaped flange 26 that extends coterminous with edge 24 about the entire periphery of the component 16. The component 16 is made of relatively rigid plastics material, preferably polypropylene, by conventional plastics forming methods such as injection molding. Most grades of polypropylene are acceptable for use, the most preferred being a high stiffness medium impact grade copolymer to provide a good balance of stiffness and impact resistance. Such resins are available from commercial suppliers in the industry.

Continuing with reference to Figs. 1, 2, and 4, the perimeter component is configured as an ovular ring having an inwardly disposed, upwardly concave portion 28 that terminates at an inward edge 30. The inward edge 30 defines a central opening 32 that is sized to duplicate the shape and dimension of the component 16 as a consequence of the method of manufacture described below.

The perimeter component inward portion 28 intersects with an outwardly disposed edge portion 34 which, in turn merges with a downturned skirt portion 36. The skirt portion 36 is defined along an inward facing surface by a lower annular shoulder protrusion 38 and an upper, inverted U-shaped channel 40. The channel 40 is dimensioned to receive the upper rim 42 of the container base 12. The base 12 is configured having an annular rim bead protrusion 44 that resides within the channel 40 of the lid when the lid is upon the base, and an annular rim depression 46 is disposed below the bead protrusion 44 to admit the shoulder protrusion 38 of the lid depending skirt portion 36.

It will be appreciated that the inner dimension of the lid 14, as measured between the skirt shoulder protrusions 38, is slightly smaller that the outer diameter of the container base, as measured to the outside of bead protrusion 44. Thus, when the lid is attached to the base, the skirt portion 36 must be stretched outward and downward over the rim protrusion 44. Upon release, the stretched skirt portion 36 elastically resumes its original form, whereby a tight seal is established between the shoulder protrusion 44 and the rim depression 46 and rim protrusion 46 of the container base.

The lid 14 is designed to be insert-molded, providing a stiffer center component 16 permanently affixed to a more flexible perimeter component 18. The center component 16 is injection molded from polypropylene, using standard high stiffness, medium impact grades of material. The result is a balance of stiffness and impact resistance. Such resins are commercially available from standard industry suppliers.

The perimeter component 18 is preferably injection molded around the polypropylene component 16 inserts. The perimeter component 18 is composed of a thermoplastic rubber compound of the type containing a discrete phase of crosslinked EPDM rubber particles in a continuous phase of polypropylene. One such compound is sold under the Santoprene trademark, manufacture by Advanced Elastomer Systems, L.P. of Akron, Ohio.

The use of a compound comprising cross linked rubber particles and polypropylene provides a thermoplastic material which will adhere well to polypropylene when insert molded but which also has properties much like those of other thermoset rubber materials. The preferred material is in the Shore A durometer hardness range of 55 to 87.

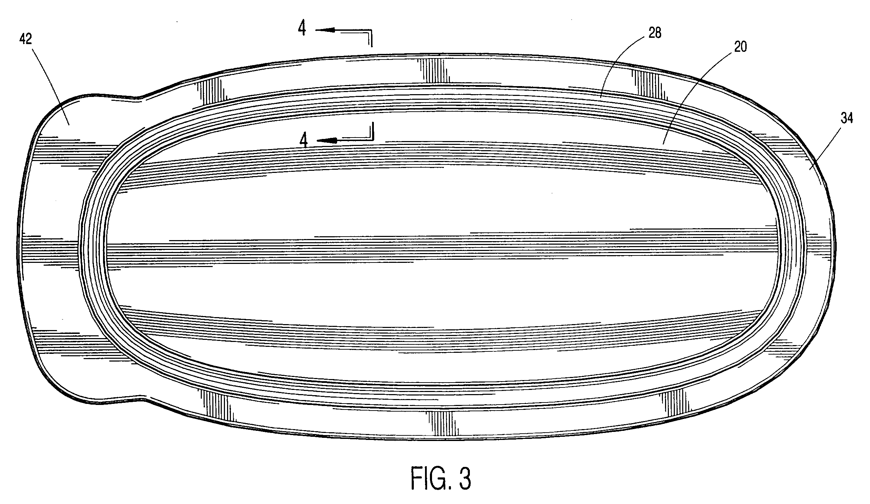

A consequence of insert molding of component 18 around component 16 is that the dovetail flange 26 becomes imbedded into edge 30 of component 18, as best shown in Fig. 4. This achieves a positive connection between the components 16 and 18 which is reinforced by the bond between the components at their interface. Thus, components of two different materials are combined to form a single lid as shown in Figs. 1, 3, and 4.

The use of a stiff polypropylene center component 16 insures the structural integrity of the lid assembly and its presence makes the lid resist warpage through use. In addition, the concept of using materials having differing degrees of stiffness provides allows the use of materials with better heat and stain resistance over an operating range from freezer to microwave reheating back to the freezer. The rubberized perimeter component provides a better seal performance and also makes the lid easier to remove and apply than prior art polyethylene lids. Finally, the perimeter component provides a soft, leakproof seal which is effective over the range of operating temperatures, provides a superior resistance to permanent set (i.e., a loss of resiliency) and provides a resistance to detrimental shrinkage of the lid from in-use thermal exposure.

While, in the preferred embodiment, the materials in the subject lid are polypropylene and crosslinked rubber particles in a continuous phase of polypropylene, the invention is not intended to be restricted thereto. Other materials that provide a combination of desirable characteristics in a composite lid can be selected, if so desired. The present invention finds application in the combination of dissimilar materials into one integral lid, wherein the materials synergistically contribute characteristics that, when combined, result in a lid that is superior than lids made entirely from either material.

Thus, other embodiments of the subject invention, and other combinations of materials, which will be apparent to those skilled in the art, and which utilize the teachings herein set forth, are intended to be within the scope and spirit of the invention.

## Claims

1. A lid (14) for enclosing an upwardly opening rim of a a container body (12), the lid (14) comprising:
a center lid component (16) having upwardly and downwardly facing surfaces (20, 22) that terminate at an outward peripheral edge (24);
a perimeter lid component (18) circumscribing the center component (16) and comprising an inward facing edge (30) attached to the outward peripheral edge (24) ofthe center component (16), and a downturned outer edge portion (36) that engages the rim (42) of the container body (12), whereby securing the lid (14) to the container (12).

2. A lid (14) according to claim 1, wherein the lid center component (16) is composed of relatively more rigid material than the perimeter lid component (18).

3. A lid (14) according to claim 1, wherein the lid center component peripheral edge (24) is configured to have an outwardly directed dovetail-shaped flange (26) that projects into the inward facing edge (30) of the lid perimeter component (18).

4. A lid (14) according to claim 3, wherein the lid perimeter component (18) is molded to the lid center component peripheral edge (24) whereby the perimeter component inward edge (30) captures the dovetail-shaped flange (26) of the lid center component (16) to connect the lid components (16, 18) together.

5. A lid (14) according to claim 4, wherein the lid perimeter component downturned outer edge portion (36) is sufficiently flexible to deform outward and over the container body upper rim (42) and thereafter resiliently draw inward to create a liquid tight seal between an inward facing surface (40) of the downturned outer edge portion (36) and an outer surface (44) of the container body (12).

6. A lid (14) of dual material composition for enclosing an upwardly opening rim of a container body (12), the lid (14) comprising:
a center lid component (16) formed from a first material and configured having upwardly and downwardly facing surfaces (20, 22) that terminate at an outward peripheral edge (24);
a perimeter lid component (18) formed from a second material and configured to circumscribe the center component (16), the perimeter component (18) comprising an inward facing edge (30) attached to the outward peripheral edge (24) of the center component (16) and a downturned outer edge portion (36) that engages the rim (42) of the container body (12), whereby securing the lid (14) to the container (12).

7. A lid (14) according to claim 6, wherein the first and second materials differ in at least one material property.

8. A lid (14) according to claim 7, wherein the first and second materials differ in rigidity.

9. A lid (14) according to claim 8, wherein the first material is of plastic composition and the second material is of composite rubber and plastic composition.

10. A method of manufacturing a lid assembly (14) comprising:
molding a center lid component (16) from a first material, the center lid component (16) having upwardly and downwardly facing surfaces (20, 22) that terminate at an outward peripheral edge (24);
placing the center lid component (16) into a secondary mold;
injecting the secondary mold with a second material to form a perimeter lid component (18) that circumscribes the center component (16) and that comprises an inward facing edge (30) attached to the outward peripheral edge (24) of the center component (16).

11. A method of manufacturing a lid assembly (14) according to claim 10, further comprising the steps of:
forming an outwardly directed dovetail-shaped flange (26) to project from the lid center component peripheral edge (24); and forming the perimeter lid component inward facing edge (30) to capture the dovetail-shaped flange (26), whereby connecting the two lid components (16, 18) together.

12. A method of manufacturing a lid assembly (14) according to claim 10, further comprising the step of:
selecting the first material and the second material so that they differ in at least one material property.
